# EUROPÄISCHE PATENTSCHRIFT

(11) **EP 1 985 482 B1**
(45) Veröffentlichungstag und Bekanntmachung des Hinweises auf die Patenterteilung: **28.11.2012**
(21) Anmeldenummer: 08004744.2
(22) Anmeldetag: 14.03.2008
(51) Int. Cl.: B60H 1/34

(54) **Komfortdüse**
Air outlet
Aérateur

(30) Priorität: 24.04.2007 DE 102007019682
(43) Veröffentlichungstag der Anmeldung: 29.10.2008
(73) Patentinhaber: Behr GmbH & Co. KG, 70469 Stuttgart (DE)
(72) Erfinder: Klingler, Dietrich, 73540 Heubach (DE)
(74) Vertreter: Grauel, Andreas

(56) Entgegenhaltungen:
- EP-A- 1 520 736
- WO-A-2004/029427
- WO-A-2005/068233
- DE-A1-102004 038 016

## Beschreibung

Die Erfindung betrifft eine Komfortdüse gemäß dem Oberbegriff des Anspruchs 1.

Aus der DE 10 2004 038 016 A1 ist ein Luftausströmer mit einem Luft zuführenden Luftkanal und einer Luftleitvorrichtung bekannt, wobei der Luftkanal in der Luftleitvorrichtung in mindestens zwei im Wesentlichen zylinderförmige Teilkanäle geteilt ist und die zylinderförmigen Teilkanäle parallel zueinander angeordnet sind. Weitere Teilkanäle sind vorgesehen, welche eine Drallströmung erzeugen. Klappen zur Regelung des den Luftausströmer durchströmenden Luftstroms und zur Regelung der Aufteilung des Luftstroms auf die beiden Bereiche des Luftausströmers, welche für einen diffusen oder einen gerichteten Luftaustritt sorgen, sind vor dem Eintritt in den Luftausströmer angeordnet. Im Bereich der Austrittsöffnung aus dem Luftausströmer sind Lamellen in Form eines Lamellengitters angeordnet, um die Luftausströmrichtung einzustellen.

Derartige Ausgestaltungen lassen jedoch noch Wünsche offen.

Es ist Aufgabe der Erfindung, eine verbesserte Komfortdüse zur Verfügung zu stellen.

Diese Aufgabe wird gelöst durch eine Komfortdüse mit den Merkmalen des Anspruchs 1. Vorteilhafte Ausgestaltungen sind Gegenstand der Unteransprüche.

Erfindungsgemäß ist eine Komfortdüse vorgesehen, die mindestens eine Luftleitvorrichtung, welche den Luftkanal in mehrere Teilluftkanäle aufteilt, wobei ein Teilluftkanal für einen Spotstrahl und mindestens ein anderer Teilluftkanal für einen diffusen Luftaustritt aus der Komfortdüse ausgebildet ist, und eine Dosiervorrichtung aufweist, mittels welcher die Luftverteilung auf die einzelnen Teilluftkanäle erfolgt, wobei die Dosiervorrichtung drei Klappen mit parallelen Schwenkachsen aufweist, und die äußeren Klappen einflügelige Klappen sind. Eine derartige Komfortdüse kann eine einfache Kinematik für die einzelnen Düsenstellungen, nämlich Spotstrahl, diffuser Strahl und Zwischenstellungen, sowie Absperrfunktion hiervon, sowie eine Absperrfunktion aufweisen. Mittels dieser Kinematikanordnung können die genannten Einstellungen durch Einstellung der entsprechenden Klappen realisiert werden. Das Vorsehen der bisher üblichen zwei Kurvenscheiben für die Regelung des Spotstrahls kann entfallen, insbesondere wenn die den einzelnen Klappen zugehörende Wellen über Zahnsegmente miteinander gekoppelt sind, und zumindest ein Zahnsegment mit einer Freilauffläche vorgesehen ist.

Bei der mittleren Klappe handelt es sich besonders bevorzugt um eine zweiflügelige Klappe mit zentraler Schwenkachse.

Die äußeren Klappen weisen entgegen der Luftanströmrichtung weisende Klappenflächen auf, welche um einen Winkel von weniger als 180°, insbesondere weniger als 120°, und ganz besonders bevorzugt von ca. 90° +/- 20° verschwenkbar sind.

Die äußeren Klappen sind in einer Endstellung mit ihren von den Schwenkachsen beabstandeten Enden aneinander anliegend angeordnet, d.h. die Klappenflächen sind V-förmig angeordnet. Dies verbessert die Luftverteilung und sorgt für relativ geringe Strömungswiderstände durch die Klappen.

Vorzugsweise sind die beiden äußeren Klappen der Dosiervorrichtung mit ihren Schwenkachsen am luftanströmseitigen Ende je einer Trennwand angeordnet. Die Trennwand bildet hierbei bevorzugt bereits einen Einströmbereich zur nachfolgend angeordneten Luftleitvorrichtung.

Die mittlere Klappe ist vorzugsweise um einen Winkel von weniger als 90° verschwenkbar, insbesondere bevorzugt in einem Winkel von weniger als 60°. Der Schwenkwinkel beträgt vorzugsweise 45° +/- 15°. Ein kleiner Schwenkwinkel lässt sich durch eine entsprechende Kopplung mit den äußeren Klappen einfacher realisieren als ein 90° Winkel.

Vorzugsweise ist die mittlere Klappe am Beginn des Teilkanals angeordnet, welcher einem Spotstrahl der Komfortdüse zugeordnet ist. Dies ermöglicht einen möglichst geradlinigen Strömungsverlauf, so dass der Luftwiderstand gering gehalten und die durch Umlenkungen bewirkten Verwirbelungen minimiert werden können.

Die äußeren Klappen sind vorzugsweise am Beginn von Teilkanälen angeordnet, welche einem diffusen Strahl der Komfortdüse zugeordnet sind. Da diese äußeren Teilkanäle üblicherweise mehr umgelenkt werden müssen, kann die Umlenkung mit der Drallerzeugung verbunden werden.

Der Luftkanal, welcher die beispielsweise von einer Klimaanlage kommende Luft der Komfortdüse zuführt, ist vorzugsweise mit einem rechteckförmigen Querschnitt endend ausgebildet, in welchem die Dosiervorrichtung angeordnet ist.

Im Folgenden wird die Erfindung anhand eines Ausführungsbeispiels unter Bezugnahme auf die Zeichnung im Einzelnen erläutert. In der Zeichnung zeigen:
- Fig. 1: eine Ansicht von hinten auf eine Komfortdüse gemäß dem Ausführungsbeispiel,
- Fig. 2: einen Schnitt durch die Komfortdüse von Fig. 1 entlang der Linie II-II,
- Fig. 3: eine Seitenansicht in Richtung des Pfeiles III von Fig. 1 mit angedeuteten Zahnrädern und gestrichelt dargestellten Klappen, .
- Fig. 4: eine Detailansicht der die Klappen koppelnden Zahnräder von Fig. 3,
- Fig. 5: eine perspektivische Ansicht der Luftleitvorrichtung, wie sie in der Komfortdüse von Fig. 1 verwendet wird,
- Fig. 6: eine andere perspektivische Ansicht der Luftleitvorrichtung von Fig. 5,
- Fig. 7: eine erste perspektivische Ansicht eines Teils der Luftleitvorrichtung von Fig. 5,
- Fig. 8: eine andere perspektivische Darstellung des Teils der Luftleitvonichtung von Fig. 7,
- Fig. 9: eine erste perspektivische Darstellung eines zweiten Teils der Luftleitvorrichtung von Fig. 5,
- Fig. 10: eine andere perspektivische Darstellung des Teils der Luftleitvorrichtung von Fig. 9, und
- Fig. 11: eine perspektivische Darstellung eines dritten Teils der Luftleitvorrichtung von Fig. 5.

Eine Komfortdüse 1, wie sie als Ausströmer eines Kraftfahrzeug-Belüftungssystems verwendet wird, ist im Endbereich eines Luftkanals 2 angeordnet. Die Komfortdüse 1 weist eine im Wesentlichen horizontal angeordnete, rechteckige Lufteintrittsfläche 3 und eine rechteckförmige mit halbkreisförmig ausgebildeten kurzen Seiten ausgebildete Austrittsöffnung 4 in Richtung Fahrzeuginnenraum auf, wobei luftanströmseitig der Komfortdüse 1 Klappen 5 angeordnet sind, um die Luftverteilung auf den diffusen Bereich und den Strahlbereich der Komfortdüse 1 sowie den Gesamtluftmassenstrom zu regeln, und luftaustrittsseitig ein Grill (nicht dargestellt) angeordnet ist, um die Komfortdüse 1 zu schützen, ggf. noch die Luftströmung zu richten und die Öffnung optisch an die benachbarten Flächen anzupassen.

Die im Endbereich eines Luftkanals 2 angeordnete Komfortdüse 1 umfasst eine Dosiervorrichtung 6, welche durch die Klappen 5 in Verbindung mit Wänden der Komfortdüse 1 gebildet wird, auf die nachfolgend näher erläutert wird, und eine Luftleitvorrichtung 7, welche der Dosiervorrichtung 6 nachgeordnet ist.

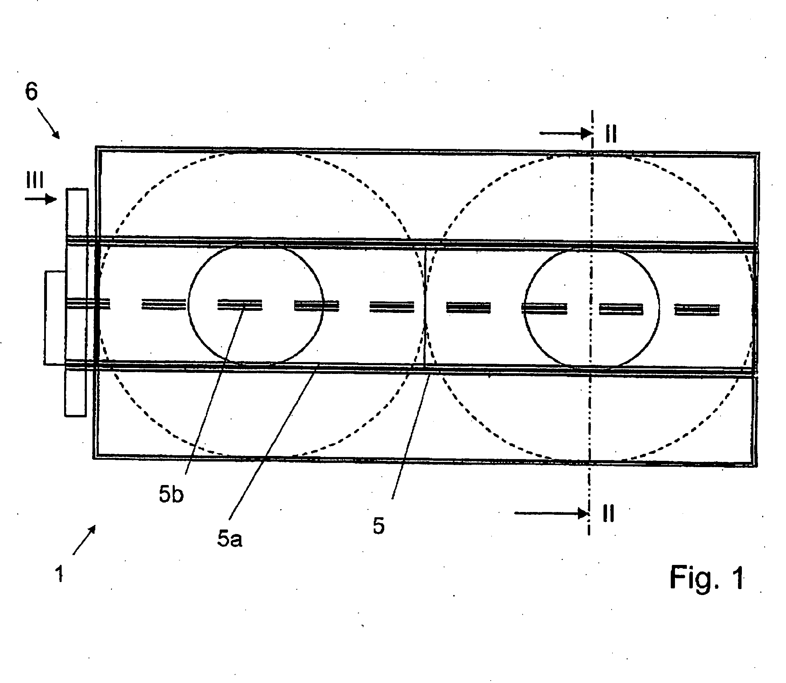

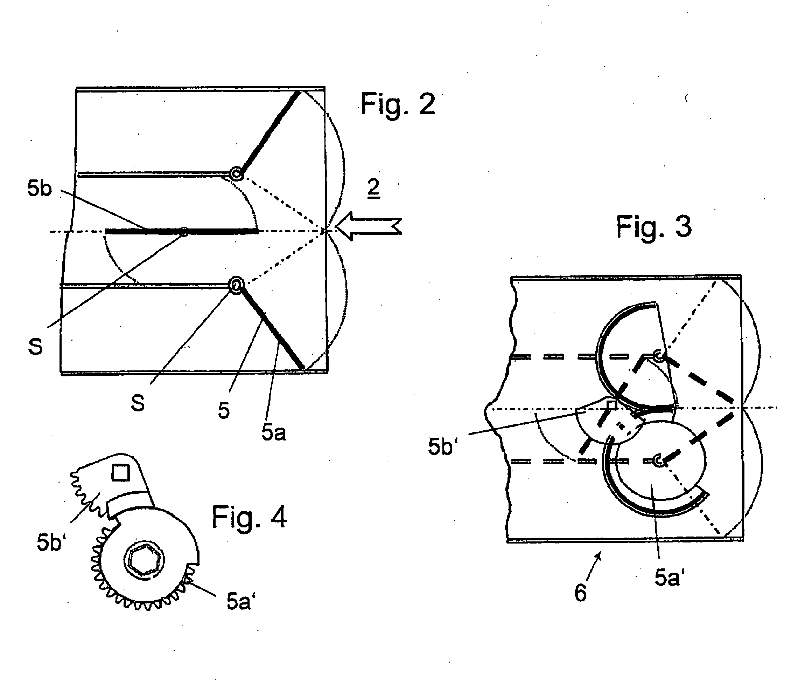

Die Dosiervorrichtung 6 ist durch eine Klappenanordnung, bestehend aus drei Klappen 5 gebildet, welche eine gezielte Luftverteilung auf die einzelnen Teilkanäle der an späterer Stelle näher beschriebenen Luftleitvorrichtung 7 der Komfortdüse 1 ermöglicht. Die Dosiervorrichtung 6 ist insbesondere in den Figuren 1 und 2 näher dargestellt, die Figuren 3 und 4 zeigen die Kinematik der Dosiervonichtung 6. Die Steuerung erfolgt durch den Insassen über ein am (nicht dargestellten) Armaturenbrett angeordnetes Betätigungsorgan, vorliegend einen Drehknopf, welcher direkt mit einer Welle der Dosiervorrichtung 6 verbunden ist.

Der Luftkanal 2 endet rechteckförmig, wobei der Querschnitt in Längsrichtung des Rechtecks durch zwei Trennwände in drei Teilbereiche unterteilt ist, wobei der mittlere Teilbereich etwas größer ausgebildet ist als die beiden äußeren Teilbereiche. Am luftkanalseftigen Ende der Trennwände sind zwei äußere Klappen 5a angeordnet, die als einflügelige Klappen ausgebildet sind, wobei die Schwenkachsen S dieser äußeren Klappen 5a entlang des Endes der entsprechenden Trennwand verläuft. Die dritte, mittlere Klappe 5b ist als im Wesentlichen bezüglich ihrer Schwenkachse S spiegelbildliche Schmettedingsklappe ausgebildet. Alle drei Klappen 5 weisen parallel zueinander verlaufende Schwenkachsen S auf. Die Schwenkbewegungen der beiden äußeren Klappen 5a verlaufen entgegengesetzt, spiegelbildlich zur Mittellängsebene, wobei der maximale Schwenkwinkel vorliegend etwas weniger als 90° beträgt. In der mittleren Endstellung ist der Winkel, den die Klappenfilächen zur Fläche der Trennwand einnehmen vorliegend etwas kleiner als in der äußeren Endstellung. Hierbei verschließen die Klappenflächen in der äußeren Endstellung die beiden äußeren Teilbereiche des Luftkanals 2 und in ihrer mittleren Endstellung den mittleren Teilbereich des Luftkanals 2. Die mittlere Klappe 5b ist so weit in den mittleren Teilbereich des Luftkanals 2 in Luftströmungsrichtung versetzt angeordnet, dass sich keine Überschneidungen der Bewegungsbereiche der Klappen 5 ergeben. Der Schwenkwinkel der mittleren Klappe 5c beträgt vorliegend maximal ca. 50°.

Die Klappenstellung wird mittels einer relativ einfachen Kinematik ermöglicht, wobei die beiden Wellen der äußeren Klappen 5a mit Zahnsegmenten 5a' versehen sind, die miteinander kämmen. Die Welle der mittleren Klappe 5b ist mit einem Zahnsegment 5b' versehen, wobei am Zahnsegment 5b' eine Freilauffläche vorgesehen ist, um der mittleren Klappe 5b einen gewissen Freilauf zu ermöglichen, d.h. die mittlere Klappe 5b bleibt hierbei vollständig geöffnet, während sich die äußeren Klappen 5a bewegen. Derartige Getriebeanordnungen sind beispielsweise in der DE 103 46 539 A1 näher beschrieben, deren Offenbarungsgehalt in Bezug auf mögliche Bewegungsabläufe der Klappen 5 ausdrücklich einbezogen wird.

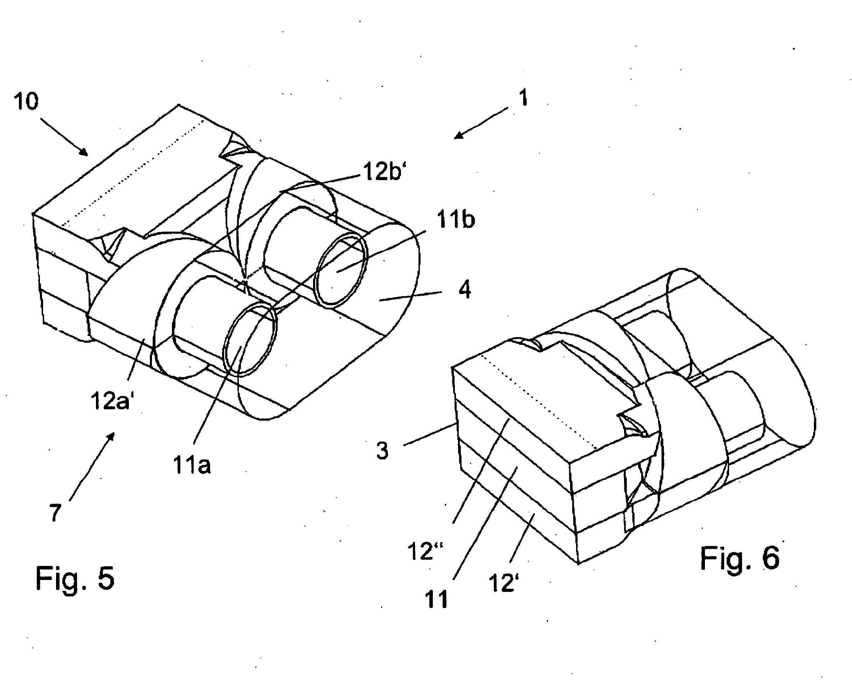

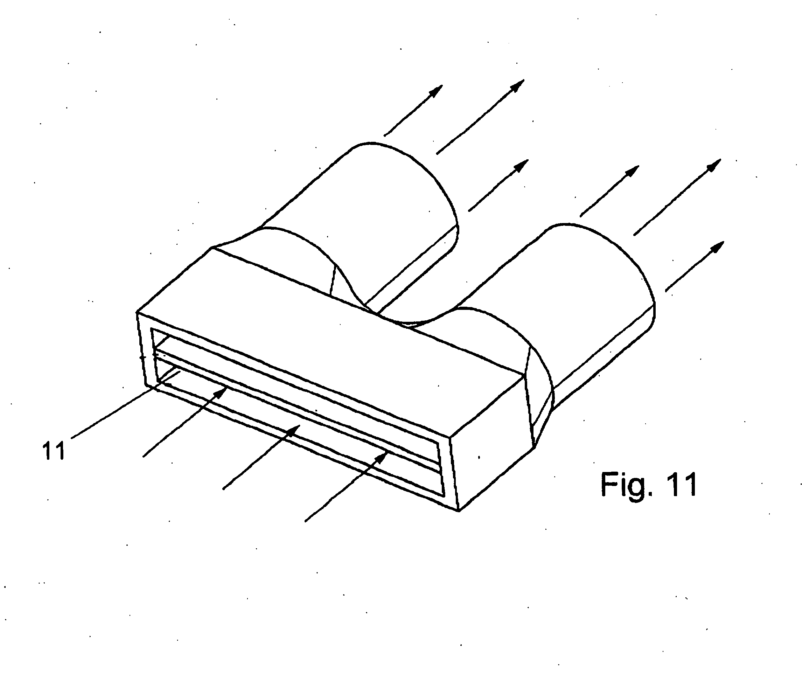

Im Folgenden wird unter Bezugnahme auf die Figuren 5 bis 11 die in Luftströmungsrichtung gesehen hinter der Dosiervorrichtung 6 angeordnete Luftleitvorrichtung 7 der Komfortdüse 1 näher erläutert.

Die Luftleitvorrichtung 7 der Komfortdüse 1 ist derart ausgebildet, dass an ihrem Eintrittsbereich 10, der anschließend an die Dosiervorrichtung 6 angeordnet ist, durch die oben genannten Trennwände eine Aufteilung des Luftkanals 2 in besagte drei Teilbereiche, im Folgenden auch als Teilkanäle 11, 12' und 12" bezeichnet, erfolgt (siehe z.B. Fig. 6). Dabei ist im Anfangsbereich, auch als Eintrittsbereich der Luftleitvorrichtung 7 bezeichnet, keine Richtungsänderung bezüglich der Richtung des Luftkanals 2 vorgesehen.

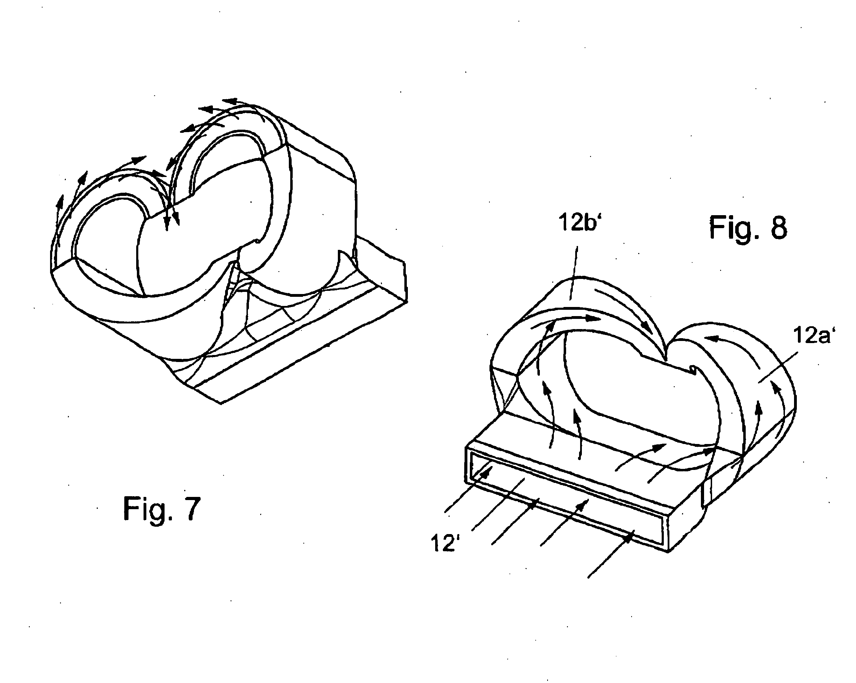

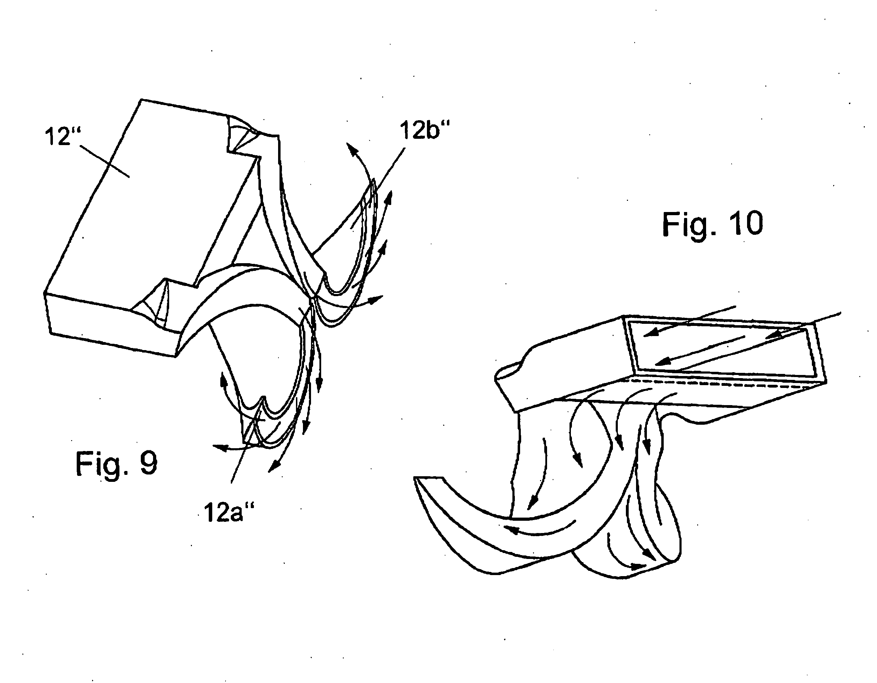

Im Anschluss an den Eintrittsbereich der Luftleitvorrichtung 7 ist jeweils eine zweite Aufteilung der Teilkanäle 11, 12' und 12" vorgesehen, wobei diesmal die Aufteilung senkrecht zur vorigen Aufteilung erfolgt, allerdings nicht notwendigerweise in der in Längsrichtung der Komfortdüse 1 gesehen gleichen Ebene. Hierbei erfolgt zuerst die Aufteilung des mittleren Teilkanals 11 in zwei Teilkanäle 11 a und 11b. Die jeweils rechteckförmigen Teilkanäle 11a und 11b werden in einen kreisförmigen Querschnitt übergeführt, wobei jeder der Teilkanäle 11a und 11 b in einem zylinderförmigen Bereich endet (siehe z.B. Fig. 5). Die beiden anderen Teilkanäle 12' und 12" werden entsprechend in Teilkanäle 12a', 12b' und 12a", 12b" aufgeteilt, wobei sich die Teilkanäle teilweise wendelartig um die zylinderförmigen Bereiche der inneren Teilkanäle 11a und 11 b erstrecken (siehe Fig. 8 und Fig. 9). Wie aus den Strömungsverläufen ersichtlich, die in der Zeichnung, durch Pfeile teilweise angedeutet sind, ergibt sich für die beiden inneren Teilkanäle 11 a und 11 b eine gerichtete Strömung, während sich für die äußeren Teilkanäle 12a', 12a" ein entgegen dem Uhrzeigersinn gerichteter, wendelartiger Strömungsverlauf und für die anderen äußeren Teilkanäle 12b' und 12b" ein im Uhrzeigersinn gerichteter, wendelartiger Strömungsverlauf ergibt.

Auf Grund der entgegengesetzt gerichteten wendelartigen Strömungsverläufe wird die durch die äußeren Teilkanäle 12a', 12a", 12b', 12b" kommende Luft mit einem Drall versehen, während die durch die inneren Teilkanäle 11a und 11 b kommende Luft diese gerade durchläuft und gerade ausströmt.

Die Funktion der Komfortdüse 1 ist Folgende: steht die Dosiervorrichtung 6 in einer Stellung, die beide Teilkanäle 11 und 12 freigibt, so gelangt jeweils ein etwa gleich großer Luftstrom in die Teilkanäle 11, 12' und 12" und weiter in die Teilkanäle 11a, 11 b, 12a', 12a", 12b' und 12b". Die die inneren Teilkanäle 11a, 11 b durchströmende Luft gelangt auf direktem Wege durch die Komfortdüse 1 und wird in im Wesentlichen gerader Richtung und mit einem ausreichend gleichmäßigen Strömungsprofil in den Fahrzeuginnenraum abgegeben. Die die äußeren Teilkanäle 12a', 12a", 12b' und 12b" durchströmende Luft wird durch die wendelartigen Verläufe umgelenkt und erhalten dadurch einen Drall, der auch an der Austrittsöffnung 4 noch vorhanden ist und für eine gewisse Verwirbelung der Luft sorgt und die jeweiligen durch die inneren Teilkanäle 11a und 11b kommenden Luftströme auffächert.

Verschließen die äußeren Klappen 5a die äußeren Teilbereiche und somit die äußeren Teilkanäle 12' und 12" und ist der innere Teilbereich bzw. Teilkanal 11 freigegeben, so gelangt die Luft ausschließlich durch die inneren Teilkanäle 11 a und 11 b zur Austrittsöffnung 4, so dass ein im Wesentlichen drallfreier Luftstrahl an den Fahrzeuginnenraum abgegeben wird (Spotwirkung).

Verschließen hingegen die äußeren Klappen 5a in Verbindung mit der inneren Klappe 5b der Dosiervorrichtung 6 den inneren Teilbereich bzw. Teilkanal 11 und sind die äußeren Teilbereiche bzw. Teilkanäle 12' und 12" freigegeben, so gelangt die Luft ausschließlich durch die äußeren Teilkanäle 12a', 12a", 12b' und 12b" der Luftleitvorrichtung 7 und erhält dadurch den o.g. Drall, der auch an der Austrittsöffnung 4 noch vorhanden ist und für eine starke Verwirbelung der Luft sorgt (diffuse Einstellung).

Zwischenbereiche können beliebig angesteuert werden, so dass eine feine Dosierung des Luftstromes mit Hilfe der Komfortdüse 1 möglich ist.

Luftaustrittsseitig kann - an Stelle des besagten Grills - eine einstellbare Lamellenanordnung vorgesehen sein, welche den Spotstrahl ggf. umlenkt oder einen diffusen Strahl geringfügig ablenkt.

## Patentansprüche

1. Komfortdüse, aufweisend mindestens eine Luftleitvorrichtung (7), welche den Luftkanal in mehrere Teilluftkanäle (11, 12', 12") aufteilt, wobei ein Teilluftkanal (11) für einen Spotstrahl und mindestens ein anderer Teilluftkanal (12', 12") für einen diffusen Luftaustritt aus der Komfortdüse (1) ausgebildet ist, und eine Dosiervorrichtung (6), mittels welcher die Luftverteilung auf die einzelnen Teilluftkanäle (11, 12', 12") erfolgt, welche Klappen (5) aufweist, wobei
die Dosiervorrichtung (6) drei Klappen (5) mit parallelen Schwenkachsen (S) aufweist, **dadurch gekennzeichnet, dass** die äußeren Klappen (5a) einflügelige Klappen sind und die äußeren Klappen (5a) entgegen der Luftanströmrichtung weisende Klappenflächen aufweisen, welche um einen Winkel von weniger als 180°, insbesondere weniger als 120°, verschwenkbar sind und die äußeren Klappen (5a) in einer Endstellung mit ihren von den Schwenkachsen (S) beabstandeten Enden aneinander anliegen und die Klappenflächen V-förmig angeordnet sind.

2. Komfortdüse nach Anspruch 1, **dadurch gekennzeichnet, dass** die mittlere Klappe (5b) eine zwelflugelige Klappe mit zentraler Schwenkachse (S) ist.

3. Komfortdüse nach einem der vorhergehenden Ansprüche, **dadurch gekennzeichnet, dass** die mittlere Klappe (5b) um einen Winkel von weniger als 90° verschwenkbar ist.

4. Komfortdüse nach einem der vorhergehenden Ansprüche, **dadurch gekennzeichnet, dass** die mittlere Klappe (5b) am Beginn des Teilkanals (11) angeordnet ist, welcher einem Spotstrahl der Komfortdüse (1) zugeordnet ist.

5. Komfortdüse nach einem der vorhergehenden Ansprüche, **dadurch gekennzeichnet, dass** die äußeren Klappen (5a) am Beginn von Teilkanälen (12', 12") angeordnet sind, welche einem diffusen Strahl der Komfortdüse (1) zugeordnet sind.

6. Komfortdüse nach einem der vorhergehenden Ansprüche, **dadurch gekennzeichnet, dass** die beiden äußeren Klappen (5a) in ihrer Bewegung miteinander gekoppelt sind, wobei gegenläufige Bewegungsabläufe vorgesehen sind.

7. Komfortdüse nach einem der vorhergehenden Ansprüche, **dadurch gekennzeichnet, dass** den einzelnen Klappen (5) zugehörend Wellen über Zahnsegmente (5a', 5b') miteinander gekoppelt sind, und zumindest ein Zahnsegment mit einer Freilauffläche vorgesehen ist.

8. Komfortdüse nach einem der vorhergehenden Ansprüche, **dadurch gekennzeichnet, dass** die Dosiervorrlchtung (6) In Luftströmungsrichtung gesehen vor der Luftleitvorrichtung (7) angeordnet ist.

9. Komfortdüse nach einem der vorhergehenden Ansprüche, **dadurch gekennzeichnet, dass** der Luftkanal (2) mit einem rechteckförmigen Querschnitt endet, in welchem die Dosiervorrichtung (6) angeordnet ist.

10. Komfortdüse nach einem der vorhergehenden Ansprüche, **dadurch gekennzeichnet, dass** die beiden äußeren Klappen (5a) der Dosiervorrichtung (6) mit ihren Schwenkachsen (S) am luftanströmseitigen Ende je einer Trennwand angeordnet sind.

11. Komfortdose nach einem der vorhergehenden Ansprüche **dadurch gekennzeichnet, dass** durch die Kinematik die Stellungen Spot-Diffus-Spotdiffus und Absperren eingestellt werden können.

## Claims

1. A comfort nozzle, comprising at least one air-guiding device (7), which divides the air duct into a plurality of secondary air ducts (11, 12', 12"), wherein one secondary air duct (11) is designed for a spot jet and at least one other secondary air duct (12', 12") is designed for a diffuse air discharge from the comfort nozzle (1), and comprising a metering device (6), by means of which the air is distributed over the individual secondary air ducts (11, 12', 12"), said metering device having flaps (5), wherein the metering device (6) has three flaps (5) with parallel pivot axes (S), **characterised in that** the outer flaps (5a) are single-leaf flaps and the outer flaps (5a) have flap faces pointing against the direction of oncoming air, which are pivotable by an angle of less than 180°, in particular less than 120°, and the outer flaps (5a) rest against one another in an end position by their ends distanced from the pivot axes (S) and the flap faces are arranged in a V-shaped manner.

2. The comfort nozzle according to claim 1, **characterised in that** the centre flap (5b) is a two-leafed flap with a central pivot axis (S).

3. The comfort nozzle according to one of the preceding claims, **characterised in that** the centre flap (5b) is pivotable about an angle of less than 90°.

4. The comfort nozzle according to one of the preceding claims, **characterised in that** the centre flap (5b) is arranged at the start of the secondary duct (11) that is assigned to a spot jet of the comfort nozzle (1).

5. The comfort nozzle according to one of the preceding claims, **characterised in that** the outer flaps (5a) are arranged at the start of secondary ducts (12', 12") that are assigned to a diffuse jet of the comfort nozzle (1).

6. The comfort nozzle according to one of the preceding claims, **characterised in that** the two outer flaps (5a) are coupled together in terms of their movement, wherein movement sequences in opposite directions are provided.

7. The comfort nozzle according to one of the preceding claims, **characterised in that** shafts belonging to the individual flaps (5) are coupled to one another via toothed segments (5a', 5b'), and at least one toothed segment is provided with a freewheeling area.

8. The comfort nozzle according to one of the preceding claims, **characterised in that** the metering device (6) is arranged in the direction of airflow, as viewed in front of the air-guiding device (7).

9. The comfort nozzle according to one of the preceding claims, **characterised in that** the air duct (2) ends with a rectangular cross section, in which the metering device (6) is arranged.

10. The comfort nozzle according to one of the preceding claims, **characterised in that** the pivot axes (S) of the two outer flaps (5a) of the metering device (6) are each arranged at the end of a respective partition wall on the side of incoming air.

11. The comfort nozzle according to one of the preceding claim, **characterised in that** the following positions: spot, diffuse, spot and diffuse, and locked can be set by the kinematics.

## Revendications

1. Buse de confort présentant au moins un dispositif déflecteur d'air (7) qui divise le conduit d'air en plusieurs conduits d'air partiels (11, 12', 12"), ou un conduit d'air partiel (11) est conçu pour un jet concentré, et au moins un autre conduit d'air partiel (12', 12") est conçu pour une sortie d'air diffus provenant de la buse de confort (1), et un dispositif de dosage (6) au moyen duquel se produit la répartition d'air aux différents conduits d'air partiels (11, 12', 12"), dispositif de dosage qui présente des volets (5), où le dispositif de dosage (6) présente trois volets (5) ayant des axes de pivotement (S) parallèles, **caractérisée en ce que** les volets extérieurs (5a) sont des volets à une seule ailette, et les volets extérieurs (5a) présentent des surfaces de volets tournées dans le sens inverse de la direction d'arrivée d'air, lesquelles surfaces de volets sont orientables suivant un angle de moins de 180°, en particulier de moins de 120°, et les volets extérieurs (5a), dans une position de fin de course, sont en appui les uns contre les autres par leurs extrémités espacées par rapport aux axes de pivotement (S), et les surfaces de volets sont disposées en forme de V.

2. Buse de confort selon la revendication 1, **caractérisée en ce que** le volet du milieu (5b) est un volet à deux ailettes comportant un axe de pivotement central (S).

3. Buse de confort selon l'une ou l'autre des revendications précédentes, **caractérisée en ce que** le volet à milieu (5b) est orientable suivant un angle de moins de 90°.

4. Buse de confort selon l'une quelconque des revendications précédentes, **caractérisée en ce que** le volet du milieu (5b) est disposé au début du conduit partiel (11) qui est associé à un jet concentré de la buse de confort (1).

5. Buse de confort selon l'une quelconque des revendications précédentes, **caractérisée en ce que** les volets extérieurs (5a) sont disposés au début de conduits partiels (12', 12") qui sont associés à un jet diffus de la buse de confort (1).

6. Buse de confort selon l'une quelconque des revendications précédentes, **caractérisée en ce que** les deux volets extérieurs (5a) sont couplés l'un à l'autre dans leurs mouvements, où il est prévu des mouvements ayant lieu en sens opposé.

7. Buse de confort selon l'une quelconque des revendications précédentes, **caractérisée en ce que** des arbres appartenant aux différents volets (5) sont couplés entre eux par des segments dentés (5a', 5b'), et il est prévu au moins une segment denté comportant une surface de roue libre.

8. Buse de confort selon l'une quelconque des revendications précédentes, **caractérisée en ce que** le dispositif de dosage (6), vu dans la direction d'écoulement de l'air, est disposé en amont du dispositif déflecteur d'air (7).

9. Buse de confort selon l'une quelconque des revendications précédentes, **caractérisée en ce que** le conduit d'air (2) se termine par une section de forme rectangulaire dans laquelle est disposé le dispositif de dosage (6).

10. Buse de confort selon l'une quelconque des revendications précédentes, **caractérisée en ce que** les deux volets extérieurs (5a) du dispositif de dosage (6) sont disposés en ayant leurs axes de pivotement (S) au niveau de l'extrémité, côté arrivée d'air, à chaque fois d'une paroi de séparation.

11. Buse de confort selon l'une quelconque des revendications précédentes, **caractérisée en ce que** les positions jet concentré/jet diffus/jet concentré et diffus, et la position fermeture, peuvent être réglées par la cinématique.
